# EUROPEAN PATENT APPLICATION

(11) **EP 4 779 083 A1**
(43) Date of publication of application: **22.07.2026**
(21) Application number: 23952016.6
(22) Date of filing: 06.11.2023
(51) Int. Cl.: E01H 5/04, E01H 5/08, G05D 1/43, G05D 1/48

(54) **SNOW SHOVELLING RECOVERY METHOD AND APPARATUS, AND SNOWPLOW**

(30) Priority: 11.09.2023 CN 202311174436
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHANG, Wei, Shenzhen, Guangdong 518000 (CN); ZHENG, Chuwei, Shenzhen, Guangdong 518000 (CN); YE, Hanwen, Shenzhen, Guangdong 518000 (CN)
(74) Representative: Abel & Imray LLP
(86) International application number: PCT/CN2023/129981
(87) International publication number: WO 2025/055091

(57) **Abstract**

A snow shovelling recovery method and apparatus, and a snowplow. The method comprises: when detecting that a current position meets a recovery trigger condition, a snowplow executing a corresponding preset recovery action, wherein the preset recovery action comprises: adjusting the head height of a snowplow head of the snowplow at least once; upon completion of the preset recovery action, determining whether the current position still meets the recovery trigger condition; and if not, then determining a subsequent snow shovelling position, and executing a snow shovelling operation.

## Description

### CROSS-REFERENCE TO RELATED APPLICATIONS

This application claims priority to the Chinese patent application filed with the CNIPA on September 11, 2023, with Application No. 202311174436.8 and titled "SNOW SHOVELLING RECOVERY METHOD AND APPARATUS, AND SNOWPLOW", the entire content of which is incorporated herein by reference.

### TECHNICAL FIELD

This application relates to the technical field of snowplows, and in particular, to a snow shovelling recovery method and apparatus, and a snowplow.

### BACKGROUND

In existing snowplows, the snowplow path is formed by manually operating the direction of the snowplow's movement. The inventor has realized that with this method, the snowplow cannot achieve intelligent movement. Furthermore, during movement, if it bumps into ground protrusions, ice pillars, or ground crevices, the snowplow can easily ride up onto the snow pile, causing the snowplow to slip and affecting its snow-clearing efficiency. When an existing snowplow is in a predicament, it gets out of it by reversing along the original path, which increases the detour distance, thus affecting the snowplow's snow-clearing efficiency.

The above content is only used to assist in understanding the technical solution of this application and does not represent an admission that the above content is the prior art.

### SUMMARY

The main purpose of this application is to provide a snow shovelling recovery method and apparatus, and a snowplow, aiming to solve the technical problem in the prior art that the snowplow gets out of a predicament by reversing along the original path, which makes the detour distance longer and thus affects the work efficiency of the snowplow.

To achieve the above purpose, this application provides a snow shovelling recovery method, the method including the following steps:
when a snowplow detects that a current position meets a recovery trigger condition, executing a corresponding preset recovery action, wherein the preset recovery action includes: adjusting the head height of a snowplow head of the snowplow at least once;
upon completion of the preset recovery action, determining whether the current position still meets the recovery trigger condition; and
if not, then determining a subsequent snow shovelling position, and executing a snow shovelling operation.

Furthermore, to achieve the above purpose, this application also proposes a snow shovelling recovery apparatus, the apparatus including:
a detection module, configured to, when a snowplow detects that a current position meets a recovery trigger condition, execute a corresponding preset recovery action, wherein the preset recovery action includes: adjusting the head height of a snowplow head of the snowplow at least once;
a determination module, configured to, upon completion of the preset recovery action, determine whether the current position still meets the recovery trigger condition; and
a snow shovelling module, configured to, if not, then determine a subsequent snow shovelling position, and execute a snow shovelling operation.

Furthermore, to achieve the above purpose, this application also proposes a snowplow, the snowplow including: a snowplow head, a snowplow body, and one or more controllers, the snowplow head is detachably connected to the snowplow body, the one or more controllers are arranged on the snowplow body, the one or more controllers are configured to control the snowplow head and a snow shovelling motor, and the one or more controllers can run a snow shovelling recovery program, the snow shovelling recovery program being configured to implement the following steps:
when a snowplow detects that a current position meets a recovery trigger condition, executing a corresponding preset recovery action, wherein the preset recovery action includes: adjusting the head height of a snowplow head of the snowplow at least once;
upon completion of the preset recovery action, determining whether the current position still meets the recovery trigger condition; and
if not, then determining a subsequent snow shovelling position, and executing a snow shovelling operation.

In the present application, when the snowplow detects that a current position meets a recovery trigger condition, a corresponding preset recovery action is executed, wherein the preset recovery action includes: adjusting the head height of a snowplow head of the snowplow at least once; upon completion of the preset recovery action, determining whether the current position still meets the recovery trigger condition; and if not, then determining a subsequent snow shovelling position, and executing a snow shovelling operation. By detecting a recovery trigger condition to trigger a preset recovery action and adjusting the head height of the snowplow head to perform a recovery operation, this application solves the technical problem in the prior art where, when a snowplow is in a predicament, it gets out of it by reversing along the original path, which makes the detour distance longer, thus improving the snow-clearing efficiency of the snowplow.

Details of one or more embodiments of this application are presented in the following drawings and description, and other features and advantages of this application will become apparent from the specification, drawings, and claims.

### BRIEF DESCRIPTION OF DRAWINGS

FIG. 1 is a schematic structural diagram of a snowplow in the hardware operating environment involved in the embodiment of this application;
FIG. 2 is a flowchart of a first embodiment of the snow shovelling recovery method of this application;
FIG. 3 is a flowchart of a second embodiment of the snow shovelling recovery method of this application; and
FIG. 4 is a structural block diagram of a first embodiment of the snow shovelling recovery apparatus of this application.

The realization of the purpose, functional features, and advantages of this application will be further described with reference to the embodiments and the accompanying drawings.

### DETAILED DESCRIPTION

It should be understood that the specific embodiments described herein are only used to explain this application and are not intended to limit this application.

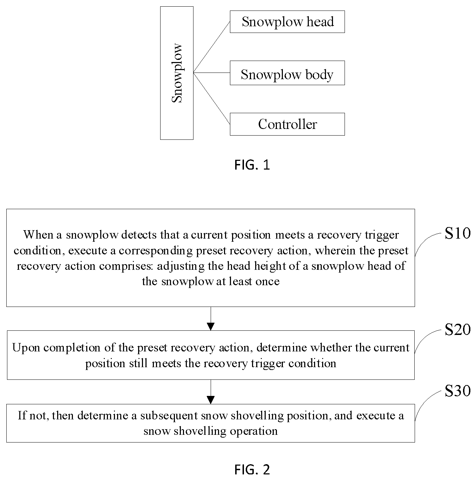

Referring to FIG. 1, FIG. 1 is a schematic structural diagram of a snowplow in the hardware operating environment involved in the embodiment of this application.

As shown in FIG. 1, the snowplow may include: a snowplow head, a snowplow body, and a controller. The snowplow head is detachably connected to the snowplow body. One or more controllers are provided on the snowplow body. The one or more controllers are configured to control the snowplow head and the snow shovel motor. The one or more controllers can run a snow shovelling recovery program, which is configured to implement the steps of the snow shovelling recovery method as described above. The snowplow executes the snow shovelling recovery method provided by the embodiment of this application.

Those skilled in the art can understand that the structure shown in FIG. 1 does not constitute a limitation on the snowplow and may include more or fewer components than shown, or a combination of certain components, or a different arrangement of components.

An embodiment of this application provides a snow shovelling recovery method. Referring to FIG. 2, FIG. 2 is a flowchart of a first embodiment of the snow shovelling recovery method of this application.

In this embodiment, the recovery trigger condition includes a first recovery trigger condition and/or a second recovery trigger condition. The first recovery trigger condition is that the snowplow slips when the snowplow does not execute an automatic snow shovelling operation for the first time or when a motor current of the snowplow is greater than a preset threshold. The first recovery trigger condition can be implemented on the basis that the snow shovelling machine has not triggered the second recovery trigger condition, and can also be implemented on the basis that the snow shovelling machine has triggered the second recovery trigger condition. The second recovery trigger condition is that the snowplow slips when the snowplow executes an automatic snow shovelling operation for the first time or after a marked position is manually activated. The second recovery trigger condition can be implemented independently. The snow shovelling recovery method includes:
Step S10: when a snowplow detects that a current position meets a recovery trigger condition, a corresponding preset recovery action is executed, wherein the preset recovery action includes: the head height of a snowplow head of the snowplow is adjusted at least once.

It should be noted that the method of this embodiment can be applied in scenarios requiring snow shovelling, and the execution subject of the method of this embodiment can be the aforementioned snowplow or other devices capable of implementing the same or similar functions. Here, the snowplow is used to specifically describe this embodiment and the following various embodiments.

It should be noted that the aforementioned current position can be the position where the snowplow travels during the process of shovelling snow according to a preset snow removal path. In this embodiment, the snow removal path is formed by connecting position coordinates one by one.

It should be understood that the aforementioned recovery trigger condition can be a condition where, when the snowplow encounters a ground protrusion, an ice pillar, or a ground crevice during snow shovelling, it travels onto a snow pile, and the position of the snowplow determined by the positioning sensor of the snowplow does not change, but it is detected that the wheels of the snowplow have moved.

It should be emphasized that the aforementioned preset recovery action can be a corresponding recovery action triggered for execution when the snowplow detects that the current position meets a preset recovery trigger condition, to enable the snowplow to get out of the situation where it slips on a snow pile after traveling onto it when encountering a ground protrusion, an ice pillar, or a ground crevice during snow shovelling.

It can be understood that the head height of the aforementioned snowplow head can be adjusted by adjusting the push rod value, so that the snowplow head of the snowplow is lifted upward by a certain distance, which is the height from the snowplow head to the ground. Specifically, the head height of the snowplow head of the snowplow can be set to 4 levels, and the head heights of the snowplow head of the snowplow corresponding to the 4 levels are 1cm, 2cm, 3cm, and 5cm, respectively, wherein the head height of level 1 is 1cm, and the head height of level 4 is 5cm.

It should be noted that the aforementioned snow shovelling operation can be an operation performed by the snowplow for the purpose of snow shovelling while in a running state. In this embodiment, it can be an operation where the snowplow adjusts the snow-collecting blade and the snow-throwing blade to rotate at high speed while traveling.

In specific implementation, when the snowplow of this embodiment detects that the position of the snowplow determined by the positioning sensor of the snowplow has not changed, but detects that the wheels of the snowplow have moved, it executes a corresponding preset recovery action, which includes: the head height of the snowplow head of the snowplow is adjusted at least once.

Step S20: upon completion of the preset recovery action, it is determined whether the current position still meets the recovery trigger condition.

In specific implementation, after the snowplow completes the preset recovery action, it determines whether the current position still meets the recovery trigger condition. If it does not meet the recovery trigger condition, it indicates that this recovery snow shovelling operation is successful. If it still meets the recovery trigger condition, it indicates that even after the head height of the snowplow has been adjusted to the highest height, the trigger condition is still met, then the snowplow's execution of the recovery snow shovelling operation has failed, and the user needs to be notified to implement other solutions.

Step S30: if not, then a subsequent snow shovelling position is determined, and a snow shovelling operation is executed.

In specific implementation, if the current position does meet the recovery trigger condition, it will determine the next target position based on the preset travel path and continue to perform the snow shovelling operation.

In the present embodiment, when the snowplow detects that a current position meets a recovery trigger condition, a corresponding preset recovery action is executed, wherein the preset recovery action includes: adjusting the head height of a snowplow head of the snowplow at least once; upon completion of the preset recovery action, determining whether the current position still meets the recovery trigger condition; and if not, then determining a subsequent snow shovelling position, and executing a snow shovelling operation. By detecting a recovery trigger condition to trigger a preset recovery action and adjusting the head height of the snowplow head to perform a recovery operation, this embodiment solves the technical problem in the prior art where, when a snowplow is in a predicament, it gets out of it by reversing along the original path, which makes the detour distance longer, thus improving the snow-clearing efficiency of the snowplow.

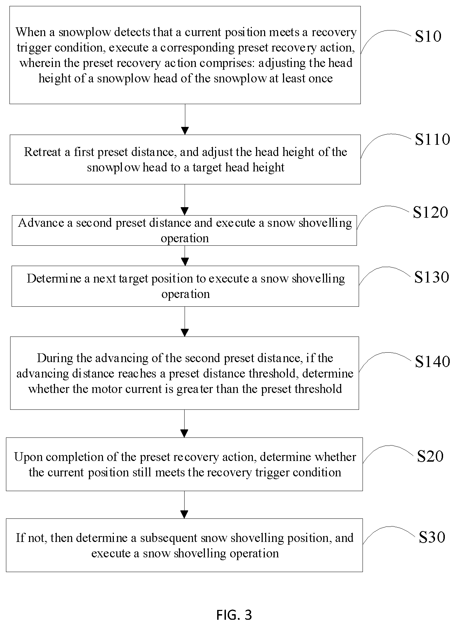

Referring to FIG. 3. FIG. 3 is a flowchart of the second embodiment of the snow shovelling recovery method of the present application.

Based on the aforementioned first embodiment, in this embodiment, the recovery trigger condition includes a first recovery trigger condition, and the first recovery trigger condition is that the snowplow slips when the snowplow does not execute an automatic snow shovelling operation for the first time or when a motor current of the snowplow is greater than a preset threshold. Correspondingly, the preset recovery action includes the following steps:

It should be understood that the first recovery trigger condition can be a situation where the snowplow still slips when the first recovery trigger condition is implemented on the basis that the snow shovelling machine has triggered the second recovery trigger condition.

It should be noted that the aforementioned first recovery trigger condition can be a snow shovelling operation performed by the snowplow after a terrain recording behavior.

Step S110: the snowplow retreats a first preset distance, and the head height of the snowplow head is adjusted to a target head height.

It should be noted that the aforementioned target head height can be the head height to which the snowplow head is to be adjusted.

Step S120: the snowplow advances a second preset distance and executes a snow shovelling operation.

Step S130: during the advancing of the second preset distance, if the advancing distance reaches a preset distance threshold, it is determined whether the motor current is greater than the preset threshold.

It should be noted that whether the snowplow has a snow-eating behavior, i.e., the situation where the snowplow has shoveled snow, can be judged by the magnitude of the motor current (motor load). Specifically, whether the current is greater than a preset threshold is judged, such as 17A. If it is greater than the preset threshold, it indicates that the snowplow is in a snow-eating state; if it is less than or equal to the preset threshold, it indicates that the snowplow is in a non-snow-eating state.

It should be understood that the aforementioned preset distance threshold can be a value greater than zero and less than the second preset distance. During the process of the snowplow advancing the second preset distance, when the advancing distance reaches the preset distance threshold, by judging whether the snowplow has a snow-eating behavior, it is determined whether the snowplow's current recovery trigger condition is thick hard snow or a ground crevice/terrain bulge/ice pillar.

Step S140: if not, the snowplow continues snow shovelling at the target head height, and after confirming that snow shovelling is completed, the head height of the snowplow head is adjusted to a ground-hugging height.

It should be noted that the aforementioned ground-hugging height can be the height at which the snowplow head of the snowplow is flush with the ground, i.e., the ground clearance of the snowplow head is zero.

It should be noted that if the motor current of the snowplow is less than or equal to the preset threshold, the current recovery trigger condition is a ground crevice/terrain bulge/ice pillar.

In specific implementation, when the snowplow detects that the current position is under the first recovery condition, it retreats the first preset distance and adjusts the head height of the snowplow head to the target head height. During the process of advancing the second preset distance, if the advancing distance reaches the preset distance threshold, it judges whether the motor current is greater than the preset threshold. If not, it continues to shovel snow at the target head height. After confirming that snow shovelling is completed, the head height of the snowplow head is adjusted to the ground-hugging height. Specifically, when the snowplow detects that the current position meets the recovery trigger condition without a terrain record, the snowplow retreats 50cm, adjusts the head height of the snowplow head to 3cm, and the snowplow advances 65cm. When it has advanced 55cm, if the motor current of the snowplow is less than or equal to 17A, it indicates that the snowplow has crossed the ground bulge and completed the recovery.

Furthermore, in this embodiment, after the aforementioned step S130, the method includes:
Step S131: if yes, the snowplow retreats the first preset distance from the advancing distance, and the head height of the snowplow head is adjusted to the ground-hugging height.

It should be noted that if the motor current of the snowplow is greater than the preset threshold, it indicates that the current recovery trigger condition is thick hard snow.

Step S132: the snowplow continues to advance the second preset distance, and maintains the head height of the snowplow head at the ground-hugging height while traveling to the next snow shovelling position

In specific implementation, during the process of the snowplow traveling to the next snow shovelling position, it will maintain the head height of the snowplow head at the ground-hugging height. If the next snow shovelling position entered is a marked position of a terrain record, it will directly adjust the ground-hugging height to the head height corresponding to the position of the terrain record. If the next snow shovelling position entered is a marked position of a terrain record, and when passing through this position with the head height corresponding to the position of the terrain record, it is determined that slippage occurs, the preset recovery action corresponding to the first recovery trigger condition is executed, including: the snowplow retreats 50cm, the head height of the snowplow head is adjusted to 3cm, then the snowplow advances 65cm, and when it has advanced 55cm, if the snowplow's motor current is greater than the preset threshold, it is judged as encountering thick hard snow, the snowplow continues to advance 65cm, and then retreats 50cm, the head height of the snowplow head is adjusted to the ground-hugging height, then the snowplow advances 65cm to shovel away the thick hard snow and resumes the normal automatic snow shovelling plan. If the next snow shovelling position entered is not a marked position of a terrain record, and slippage is determined to have occurred, the preset recovery action corresponding to the first recovery trigger condition is continued to be executed, as specifically described above.

Furthermore, in the present embodiment, the recovery trigger condition includes a second recovery trigger condition, and the second recovery trigger condition is that the snowplow slips when the snowplow executes an automatic snow shovelling operation for the first time or after a marked position is manually activated; the preset recovery action further includes the following steps:
It should be noted that the aforementioned second recovery trigger condition can be the terrain recording behavior of the snowplow, recording the positions of ground crevices/terrain bulges/ice pillars and the corresponding head height of the snowplow head.

Step S210: the head height of the snowplow head is increased from a ground-hugging height according to a preset height interval.

It should be noted that the aforementioned preset height interval can be a height interval for height adjustment achieved through the preset level heights of the snowplow. Specifically, the height interval for adjusting from level 1 (1cm) to level 2 (2cm) is 1cm.

Step S220: it is determined whether the snowplow at a current position slips according to positioning information of the snowplow.

Step S230: if yes, it is returned to the step of increasing the head height of the snowplow head according to the preset height interval until the head height of the snowplow head is adjusted to an upper limit value of the head height of the snowplow head, and the current position is used as a marked position, and the marked position and a marked head height corresponding to the marked position are recorded.

Step S240: if not, the current position is used as a marked position, and the marked position and a marked head height corresponding to the marked position are recorded.

It should be noted that the aforementioned marked position can be a position where terrain (ground crevice/terrain bulge/ice pillar) needs to be recorded.

It should be understood that the aforementioned marked head height can be the head height of the snowplow head during the recovery process when the snowplow is performing a recovery action.

In specific implementation, the marked positions of ground crevices/terrain bulges/ice pillars are recorded. In subsequent recovery processes, when traveling to that position, the head height of the snowplow head can be directly adjusted to the marked head height.

In this embodiment, if the aforementioned marked head height is less than or equal to the preset head height, after the snowplow moves one preset travel distance, the snowplow head lowers while moving, restoring the head angle to the default angle. If the aforementioned marked head height is greater than the preset head height, after the snowplow moves two preset travel distances, it first judges whether the snowplow's current inclination angle is consistent with the default angle. If not, the snowplow restores the head angle to the default angle. If they are consistent, it continues to maintain the current head height and moves one preset distance, then repeats the above judgment of whether the angles are consistent. Wherein, one preset travel distance can be any value from 20 to 40 cm, preferably 30 cm.

Furthermore, in this embodiment, the snow shovelling recovery method further includes:
Step S40: when the snowplow runs to a marked position corresponding to the next snow shovelling position, the head height of the snowplow is adjusted to the marked head height.

It should be noted that, based on the first recovery condition (terrain recording) of the snowplow, when the snowplow runs to the marked position corresponding to the next snow shovelling position, the head height of the snowplow head will be adjusted to the aforementioned recorded marked head height.

Furthermore, in this embodiment, the snow shovelling recovery method further includes:
Step S250: in a case where the snowplow executes a snow shovelling operation automatically for the first time, whether a motor current of the snowplow is greater than a preset threshold is detected.

Step S260: if yes, the head height of the snowplow head is adjusted to a ground-hugging height for snow shovelling.

Step S270: a next target position is determined to execute a snow shovelling operation.

In specific implementation, in the case where the snowplow automatically executes the snow shovelling operation for the first time, it is detected whether the motor current of the snowplow is greater than a preset threshold. If the motor current of the snowplow is greater than the preset threshold, it indicates that the snowplow is in a snow-eating state, and the head height of the snowplow head is adjusted to the ground-hugging height to shovel snow.

Furthermore, in the present embodiment, after the Step S10, the method includes:
Step S11: a current position is determined through positioning information, and whether the current position exceeds a boundary is determined.

It should be noted that the positioning information can be position information of longitude and latitude. Wherein, the positioning information can be determined after fusion positioning by the snowplow's positioning sensor and RTK (RTK is a technology that uses GPS carrier phase observations for real-time kinematic relative positioning, and is also a measuring device that can receive satellite signals to achieve high-precision positioning), and the positioning sensor can include an IMU and an odometer.

In specific implementation, positioning information is acquired through a positioning sensor to determine the current position, and it is judged whether the current position is within the range of the preset travel path. If it is within the range of the preset travel path, it does not exceed a boundary. If it is not within the preset map, it exceeds the boundary.

Step S12: if yes, a historical coordinate position determined through positioning information is acquired and the snowplow returns to a historical position corresponding to the historical coordinate position, and continues to execute a snow shovelling operation.

In specific implementation, if it exceeds the boundary, i.e., exceeds the travel path, the coordinate position of the previous snow shovelling operation is acquired (historical coordinate position), the snowplow returns to the historical position corresponding to the historical coordinate position, and continues to execute the snow shovelling operation.

Furthermore, in this embodiment, the snow shovelling recovery method further includes:
Step S50: when adjusting the head height of the snowplow head of the snowplow, a target push rod value is determined according to a relationship between a push rod value and the head height of the snowplow head.

It should be noted that the aforementioned push rod can be a component for the snowplow to adjust the head height of the snowplow head via the push rod, wherein different push rod values correspond to different head heights of the snowplow head.

Step S60: a current push rod value is adjusted to the target push rod value, so as to adjust the head height of the snowplow head.

In this embodiment, the highest head height of the snowplow head is 5cm, at which the push rod value is 0; the lowest head height of the snowplow head is 0cm, at which the push rod value is 64; and when the head height of the snowplow head is 3cm, the push rod value is 20. It can be seen that the head height of the snowplow head is determined by controlling the push rod value of the snowplow, and the relationship between the push rod value and the head height of the snowplow head is a non-linear (curve) relationship. The current push rod value is adjusted to the target push rod value to adjust the head height of the snowplow head.

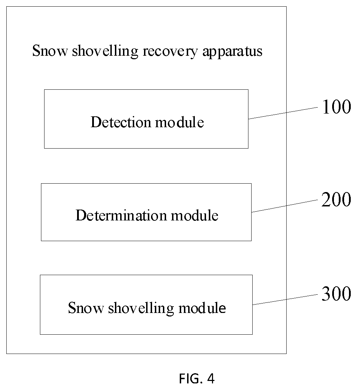

Referring to FIG. 4. FIG. 4 is a structural block diagram of the first embodiment of the snow shovelling recovery apparatus of the present application.

As shown in FIG. 4, the snow shovelling recovery apparatus proposed in the embodiment of the present application includes:
a detection module 100, configured to, when a snowplow detects that a current position meets a recovery trigger condition, execute a corresponding preset recovery action, wherein the preset recovery action includes: the head height of a snowplow head of the snowplow is adjusted at least once;
a determination module 200, configured to, upon completion of the preset recovery action, determine whether the current position still meets the recovery trigger condition; and
a snow shovelling module 300, configured to, if not, then determine a subsequent snow shovelling position, and execute a snow shovelling operation.

In the present embodiment, when the snowplow detects that a current position meets a recovery trigger condition, a corresponding preset recovery action is executed, wherein the preset recovery action includes: adjusting the head height of a snowplow head of the snowplow at least once; upon completion of the preset recovery action, determining whether the current position still meets the recovery trigger condition; and if not, then determining a subsequent snow shovelling position, and executing a snow shovelling operation. By detecting a recovery trigger condition to trigger a preset recovery action and adjusting the head height of the snowplow head to perform a recovery operation, this embodiment solves the technical problem in the prior art where, when a snowplow is in a predicament, it gets out of it by reversing along the original path, which makes the detour distance longer, thus improving the snow-clearing efficiency of the snowplow.

Other embodiments or specific implementation manners of the snow shovelling recovery apparatus of the present application can refer to the aforementioned method embodiments, and will not be repeated here.

It should be noted that, herein, the terms "comprising", "including" or any other variants thereof are intended to cover a non-exclusive inclusion, so that a process, method, article or system including a series of elements includes not only those elements, but also other elements not explicitly listed, or elements inherent to such process, method, article or system. Without more restrictions, an element defined by the phrase "including a..." does not exclude the presence of additional identical elements in the process, method, article or system including that element.

The serial numbers of the embodiments of the present application mentioned above are only for description and do not represent the pros and cons of the embodiments.

Through the description of the above implementation manners, those skilled in the art can clearly understand that the methods of the above embodiments can be implemented by means of software plus a necessary general-purpose hardware platform, and of course also by hardware, but in many cases the former is a better implementation manner. Based on this understanding, the technical solution of the present application, in essence or the part that contributes to the prior art, can be embodied in the form of a software product, which is stored in a storage medium (such as read-only memory/random access memory, magnetic disk, optical disk) and includes several instructions to make a terminal device (which can be a mobile phone, a computer, a server, or a network device, etc.) execute the methods described in various embodiments of the present application.

The above are only preferred embodiments of the present application and are not intended to limit the patent scope of the present application. Any equivalent structure or equivalent process transformations made using the content of the description and drawings of the present application, or directly or indirectly applied to other related technical fields, are similarly included in the patent protection scope of the present application.

## Claims

1. A snow shovelling recovery method, comprising:
when a snowplow detects that a current position meets a recovery trigger condition, executing a corresponding preset recovery action, wherein the preset recovery action comprises: adjusting the head height of a snowplow head of the snowplow at least once;
upon completion of the preset recovery action, determining whether the current position still meets the recovery trigger condition; and
if not, then determining a subsequent snow shovelling position, and executing a snow shovelling operation.

2. The snow shovelling recovery method according to claim 1, wherein the recovery trigger condition comprises a first recovery trigger condition, and the first recovery trigger condition is that the snowplow slips when the snowplow does not execute an automatic snow shovelling operation for the first time or when a motor current of the snowplow is greater than a preset threshold;
the preset recovery action comprises the following steps:
retreating a first preset distance, and adjusting the head height of the snowplow head to a target head height;
advancing a second preset distance and executing a snow shovelling operation;
during the advancing of the second preset distance, if the advancing distance reaches a preset distance threshold, determining whether the motor current is greater than the preset threshold;
if not, continuing snow shovelling at the target head height, and after confirming that snow shovelling is completed, adjusting the head height of the snowplow head to a ground-hugging height.

3. The snow shovelling recovery method according to claim 2, wherein after the step of, during the advancing of the second preset distance, if the advancing distance reaches the preset distance threshold, determining whether the motor current is greater than the preset threshold, the method further comprises:
if yes, retreating the first preset distance from the advancing distance, and adjusting the head height of the snowplow head to the ground-hugging height; and
continuing to advance the second preset distance, and maintaining the head height of the snowplow head at the ground-hugging height while traveling to the next snow shovelling position.

4. The snow shovelling recovery method according to claim 1, wherein the recovery trigger condition comprises a second recovery trigger condition, and the second recovery trigger condition is that the snowplow slips when the snowplow executes an automatic snow shovelling operation for the first time or after a marked position is manually activated;
the preset recovery action further comprises the following steps:
increasing the head height of the snowplow head from a ground-hugging height according to a preset height interval;
determining whether the snowplow at a current position slips according to positioning information of the snowplow;
if yes, returning to the step of increasing the head height of the snowplow head according to the preset height interval until the head height of the snowplow head is adjusted to an upper limit value of the head height of the snowplow head, and using the current position as a marked position, and recording the marked position and a marked head height corresponding to the marked position; and
if not, using the current position as a marked position, and recording the marked position and a marked head height corresponding to the marked position.

5. The snow shovelling recovery method according to any one of claims 1 to 4, wherein the method further comprises:
when the snowplow runs to a marked position corresponding to the next snow shovelling position, adjusting the head height of the snowplow to the marked head height.

6. The snow shovelling recovery method according to claim 1, wherein the method further comprises:
in a case where the snowplow executes a snow shovelling operation automatically for the first time, detecting whether a motor current of the snowplow is greater than a preset threshold;
if yes, adjusting the head height of the snowplow head to a ground-hugging height for snow shovelling; and
determining a next target position to execute a snow shovelling operation.

7. The snow shovelling recovery method according to any one of claims 1 to 4, wherein after the step of, when the snowplow detects that the current position meets the recovery trigger condition, executing the corresponding preset recovery action, the method further comprises:
determining a current position through positioning information, and determining whether the current position exceeds a boundary; and
if yes, acquiring a historical coordinate position determined through positioning information and returning to a historical position corresponding to the historical coordinate position, and continuing to execute a snow shovelling operation.

8. The snow shovelling recovery method according to claim 7, wherein the positioning information is determined after fusion positioning of an IMU, an odometer, and an RTK of the snowplow.

9. The snow shovelling recovery method according to any one of claims 1 to 4, wherein the method further comprises:
when adjusting the head height of the snowplow head of the snowplow, determining a target push rod value according to a relationship between a push rod value and the head height of the snowplow head; and
adjusting a current push rod value to the target push rod value, so as to adjust the head height of the snowplow head.

10. The snow shovelling recovery method according to claim 9, wherein different head heights of the snowplow head correspond to different push rod values.

11. A snow shovelling recovery apparatus, comprising:
a detection module, configured to, when a snowplow detects that a current position meets a recovery trigger condition, execute a corresponding preset recovery action, wherein the preset recovery action comprises: adjusting the head height of a snowplow head of the snowplow at least once;
a determination module, configured to, upon completion of the preset recovery action, determine whether the current position still meets the recovery trigger condition; and
a snow shovelling module, configured to, if not, then determine a subsequent snow shovelling position, and execute a snow shovelling operation.

12. The snow shovelling recovery apparatus according to claim 11, wherein the recovery trigger condition in the detection module comprises a first recovery trigger condition, and the first recovery trigger condition is that the snowplow slips when the snowplow does not execute an automatic snow shovelling operation for the first time or when a motor current of the snowplow is greater than a preset threshold;
the detection module is further configured to:
retreat a first preset distance, and adjust the head height of the snowplow head to a target head height;
advance a second preset distance and execute a snow shovelling operation;
during the advancing of the second preset distance, if the advancing distance reaches a preset distance threshold, determine whether the motor current is greater than the preset threshold;
if not, continue snow shovelling at the target head height, and after confirming that snow shovelling is completed, adjust the head height of the snowplow head to a ground-hugging height.

13. The snow shovelling recovery apparatus according to claim 12, wherein the detection module is further configured to:
if yes, retreat the first preset distance from the advancing distance, and adjust the head height of the snowplow head to the ground-hugging height; and
continue to advance the second preset distance, and maintain the head height of the snowplow head at the ground-hugging height while traveling to the next snow shovelling position.

14. The snow shovelling recovery apparatus according to claim 12, wherein the recovery trigger condition in the detection module comprises a second recovery trigger condition, and the second recovery trigger condition is that the snowplow slips when the snowplow executes an automatic snow shovelling operation for the first time or after a marked position is manually activated;
the detection module is further configured to:
increase the head height of the snowplow head from a ground-hugging height by a preset height interval;
determining whether the snowplow at a current position slips according to positioning information of the snowplow;
if yes, return to the step of increasing the head height of the snowplow head by the preset height interval until the head height of the snowplow head is adjusted to an upper limit value of the head height of the snowplow head, and use the current position as a marked position, and record the marked position and a marked head height corresponding to the marked position; and
if not, use the current position as a marked position, and record the marked position and a marked head height corresponding to the marked position.

15. The snow shovelling recovery apparatus according to any one of claims 12 to 14, wherein the apparatus is further configured to:
when the snowplow runs to a marked position corresponding to the next snow shovelling position, adjust the head height of the snowplow to the marked head height.

16. A snowplow, wherein the snowplow comprises: a snowplow head, a snowplow body, and one or more controllers, the snowplow head is detachably connected to the snowplow body, the one or more controllers are arranged on the snowplow body, the one or more controllers are configured to control the snowplow head and a snow shovelling motor, and the one or more controllers can run a snow shovelling recovery program, the snow shovelling recovery program being configured to implement the following steps:
when a snowplow detects that a current position meets a recovery trigger condition, executing a corresponding preset recovery action, wherein the preset recovery action comprises: adjusting the head height of a snowplow head of the snowplow at least once;
upon completion of the preset recovery action, determining whether the current position still meets the recovery trigger condition; and
if not, then determining a subsequent snow shovelling position, and executing a snow shovelling operation.

17. The snowplow according to claim 16, wherein the recovery trigger condition comprises a first recovery trigger condition, and the first recovery trigger condition is that the snowplow slips when the snowplow does not execute an automatic snow shovelling operation for the first time or when a motor current of the snowplow is greater than a preset threshold; the snow shovelling recovery program is configured to further implement the following steps under the first recovery trigger condition:
retreating a first preset distance, and adjusting the head height of the snowplow head to a target head height;
advancing a second preset distance and executing a snow shovelling operation;
during the advancing of the second preset distance, if the advancing distance reaches a preset distance threshold, determining whether the motor current is greater than the preset threshold;
if not, continuing snow shovelling at the target head height, and after confirming that snow shovelling is completed, adjusting the head height of the snowplow head to a ground-hugging height.

18. The snowplow according to claim 17, wherein the snow shovelling recovery program is configured to further implement the following steps:
if yes, retreating the first preset distance from the advancing distance, and adjusting the head height of the snowplow head to the ground-hugging height; and
continuing to advance the second preset distance, and maintaining the head height of the snowplow head at the ground-hugging height while traveling to the next snow shovelling position.

19. The snowplow according to claim 16, wherein the recovery trigger condition comprises a second recovery trigger condition, and the second recovery trigger condition is that the snowplow slips when the snowplow executes an automatic snow shovelling operation for the first time or after a marked position is manually activated; the snow shovelling recovery program is configured to further implement the following steps under the second recovery trigger condition:
increasing the head height of the snowplow head from a ground-hugging height by a preset height interval;
determining whether the snowplow at a current position slips according to positioning information of the snowplow;
if yes, returning to the step of increasing the head height of the snowplow head by the preset height interval until the head height of the snowplow head is adjusted to an upper limit value of the head height of the snowplow head, and using the current position as a marked position, and recording the marked position and a marked head height corresponding to the marked position; and
if not, using the current position as a marked position, and recording the marked position and a marked head height corresponding to the marked position.

20. The snowplow according to any one of claims 16 to 19, wherein the snow shovelling recovery program is configured to further implement the following steps:
when the snowplow runs to a marked position corresponding to the next snow shovelling position, adjusting the head height of the snowplow to the marked head height.
